# EUROPÄISCHE PATENTSCHRIFT

(11) **EP 1 066 112 B1**
(45) Veröffentlichungstag und Bekanntmachung des Hinweises auf die Patenterteilung: **11.12.2002**
(21) Anmeldenummer: 99915629.2
(22) Anmeldetag: 17.03.1999
(51) Int. Cl.: B01L 3/00, G01N 21/03

(54) **MINIATURISIERTE MIKROTITERPLATTE FÜR HOCHDURCHSATZ-SCREENING**
MINIATURIZED MICROTITER PLATE FOR HIGH THROUGHPUT SCREENING
PLAQUE DE MICROTITRAGE MINIATURISEE POUR CRIBLAGE A DEBIT ELEVE

(30) Priorität: 27.03.1998 DE 29805613 U; 12.08.1998 DE 19836505; 01.10.1998 DE 29817526 U
(43) Veröffentlichungstag der Anmeldung: 10.01.2001
(73) Patentinhaber: Aventis Pharma Deutschland GmbH, 65929 Frankfurt am Main (DE)
(72) Erfinder: VOLLERT, Henning, D-65719 Hofheim (DE)
(86) Internationale Anmeldenummer: EP9901729
(87) Internationale Veröffentlichungsnummer: WO99049973

(56) Entgegenhaltungen:
- EP-A- 0 542 422
- EP-A- 0 571 661
- WO-A-98/31466
- DE-A- 19 712 484
- US-A- 5 487 872
- US-A- 5 587 321

## Beschreibung

Die Erfindung betrifft eine miniaturisierte Mikrotiterplatte für das HT-Screening (High Throughput Screening).

Bei diesem Screening ist es wünschenswert, den Verbrauch von Assaykomponenten sowie von den Substanzen aus den Screening-Libraries möglichst niedrig zu halten und den Durchsatz von Screeningassays möglichst hoch. Dies kann durch eine Miniaturisierung von Screeningassays erreicht werden. Hierbei ist es jedoch notwendig, entsprechende Mikrotiterplatten zu befüllen, die ein Assayvolumen von etwa 0,5 bis 10 µl, bevorzugt 1 bis 6 µl, besonders bevorzugt 1' bis 2 µl, aufweisen. Verfügbar sind bisher erst wenige Prototypen, die nur von bestimmten Analysengeräten verarbeitet werden können. Benötigt werden jedoch Mikrotiterplatten, die eine Analyse mit sehr empfindlichen Detektoren (mit konfokaler Optik) ermöglichen und die die Befüllung mit "Nanodispensern" erlauben. Ferner wünschenswert ist zudem ein Verdunstungsschutz.

Bekannt sind Mikrotiterplatten der Fa. Greiner, 64943 Hirschberg, (Micro-Assay-Plate, 1536 wells) . Hier ist das Arbeitsvolumen der Probenträger relativ hoch (4-8 µl) und sie erlauben keine "Single Molecule Detection". Das Arbeitsvolumen der Mikrotiterplatten von Corning Costar (Corning Costar Deutschland, 55924 Bodenheim) liegt zwar zwischen 1 und 2 µl, allerdings ist der Rahmen der Mikrotiterplatten zu dünn, so daß übliche Robotersysteme die Mikrotiterplatten nicht transportieren können. Auch hier ist eine "Single Molecule Detection" nicht möglich. Aus einem Prospekt der Firma Hellma (1994) "Mikrotestplatten aus Quarzglas" sind Mikrotestplatten mit einem Boden aus Quarzglas und 384 Wells mit einem Durchmesser von 3,5 mm bekannt. Neben dem großen Assayvolumen haben diese Mikrotestplatten jedoch eine zu geringe Rahmenbreite sowie einen zu dicken Boden (> 1 mm), um eine Analyse mit Hilfe einer konfokalen Optik zu ermöglichen. In US 5,487,872 sind Multi-Assay Mikrotiterplatten für UV Spektroskopie beschrieben, die Glasplatten mit einer Mindestschichtdicke von 0,38 mm aufweisen. Auch diese Mikrotiterplatten sind für eine Analyse mit Hilfe einer konfokalen Optik nicht geeignet. Mikrotestplatten mit Deckeln als Verdunstungsschutz sind in einem Prospekt der Firma Radleys (1997) beschrieben "Specialist Micro Titer Plates & Accessories".

Hier will die Erfindung Abhilfe schaffen.

Erfindungsgemäß geschieht dies durch eine miniaturisierte Mikrotiterplatte, die dadurch gekennzeichnet ist, daß die Mikrotiterplatte (Körper aus Kunststoff, Boden aus Glas), 1000 bis 4000 Gefäße (Wells), bevorzugt 1400 bis 2500 Gefäße (Wells), besonders bevorzugt 1536 Gefäße (Wells), hat, der Durchmesser der Gefäße (Wells) ungefähr 1,0 bis 1,8 mm, bevorzugt 1,2 bis 1,5 mm, ist, der Boden der Mikrotiterplatte aus Glas besteht und eine Schichtdicke von 0,07 bis 0,2 mm, bevorzugt 0,12 bis 0,17 mm, besonders bevorzugt 0,15 mm, aufweist, der Abstand zwischen dem Mittelpunkt der äußeren Gefäße (Wells) und dem Rand des Glasbodens 4 bis 11 mm beträgt, bevorzugt ≥ (größer/gleich) 5,5 mm ist und die Mikrotiterplatte einen Deckel als Verdunstungsschutz hat.

Die miniaturisierte Mikrotiterplatte hat in der Regel eine Größe von 10,0-15,0 x 7,0-10,0 cm, bevorzugt 12,7 x 8,5 cm. Jedoch sind auch davon abweichende Größen möglich.
Die Form der Gefäße (Wells) ist variabel. So können beispielsweise runde, eckige oder abgerundet eckige Gefäße verwendet werden. Bevorzugt sind runde Gefäße. Ebenso kann die Anzahl der Gefäße (Wells) von den obengenannten Werten abweichen. Der Winkel zwischen Boden und Wand der Wells kann zwischen 20° und 90° variieren.

Bei der Herstellung von Mikrotiterplatten ist es wichtig, das richtige Material zu verwenden. Der Körper der Mikrotiterplatte besteht aus Kunststoff, wie z.B. Polystyrol, Polypropylen, Polycarbonat, Vectra®, Hostalen®, Topas®. Die Mikrotiterplatten werden in der Regel im Spritzgußverfahren (oder Prägeverfahren) hergestellt. Nach dem Spritzen kühlt der Kunststoff ab. Dabei kann sich die Mikrotiterplatte verbiegen (da die Abkühlung lokal unterschiedlich schnell erfolgt). Somit ist es günstig ein Material zu verwenden, das nur eine sehr geringe "Verkrümmung" erzeugt.

Der Deckel der Mikrotiterplatte ist ebenfalls aus Kunststoff und sitzt auf der Mikrotiterplatte formschlüssig auf. Die Schichtdicke des Bodens (Material: Glas) der Mikrotiterplatte (0,07 - 0,20 mm) als auch der Durchmesser der Gefäße (ca. 1,0 - 1,8 mm) sowie der Abstand zwischen dem Mittelpunkt der äußeren Gefäße (Wells) und dem Rand des Glasbodens, der 4 bis 11 mm beträgt, erlauben die Analyse der Mikrotiterplatte mit Hilfe einer konfokalen Optik. Die Verwendung einer konfokalen Optik hat folgende Vorteile:
1. Die Sensitivität ist sehr hoch (im Vergleich zu nicht konfokalen Optiken), da u. U. sogar einzelne Moleküle detektiert werden können (Single Molecule Detection)
2. Aufgrund der hohen Sensitivität kann die Meßzeit niedriger sein und somit die gesamte Analysegeschwindigkeit einer Mikrotiterplatte erhöht werden (im Vergleich zu vielen nicht konfokalen Optiken).
3. Da der Focus einer konfokalen Optik sehr klein ist (meist deutlich unter 10 µm), ist die Detektion von Hintergrundsignalen stark reduziert und somit das Signal/Rauschverhältnis besser (im Vergleich zu nicht konfokalen Optiken).

Der Boden der Mikrotiterplatte, der aus Glas besteht, kann mit unterschiedlichen chemischen und biologischen Substanzen, wie z.B. Cellulose, Cellulosederivate, Dextrane, Polyethylenglykole beschichtet werden, um unspezifische Bindungen zu unterdrücken. Ebenfalls sollte der Boden biologische Moleküle tragen können, die spezifisch andere Substanzen binden. Letzteres ist bedeutsam für den Einsatz im Pharmascreening, z.B. für Sandwich-Assays.

Im folgenden werden mögliche Ausgestaltungen der erfindungsgemäßen Mikrotiterplatte anhand der Figuren 1 bis 3 näher beschrieben. Die Erfindung ist jedoch nicht auf diese Ausgestaltungen beschränkt.
- Fig. 1:: Perspektivische Darstellung der Mikrotiterplatte mit abgehobenem Deckel
- Fig. 2:: Schnitt gemäß Ebene II-II aus Fig. 1
- Fig. 3:: Schnitt gemäß Ebene III-III aus Fig. 1

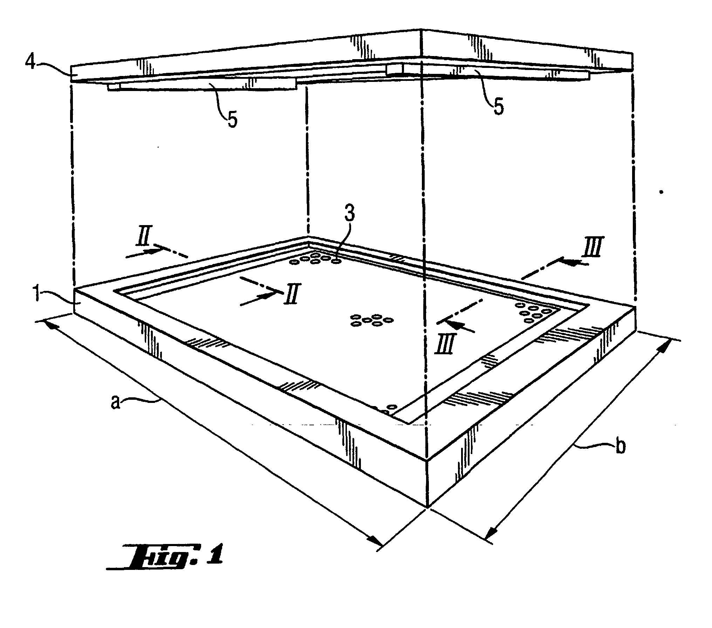

In Fig. 1 ist die Mikrotiterplatte mit den Gefäßen (3) perspektivisch dargestellt. Der Rahmen (1) hat eine Länge von a = 127 mm und eine Breite von b = 85 mm. Der Deckel (4) mit den Vorsprüngen (5) ist in abgehobenem Zustand gezeigt.

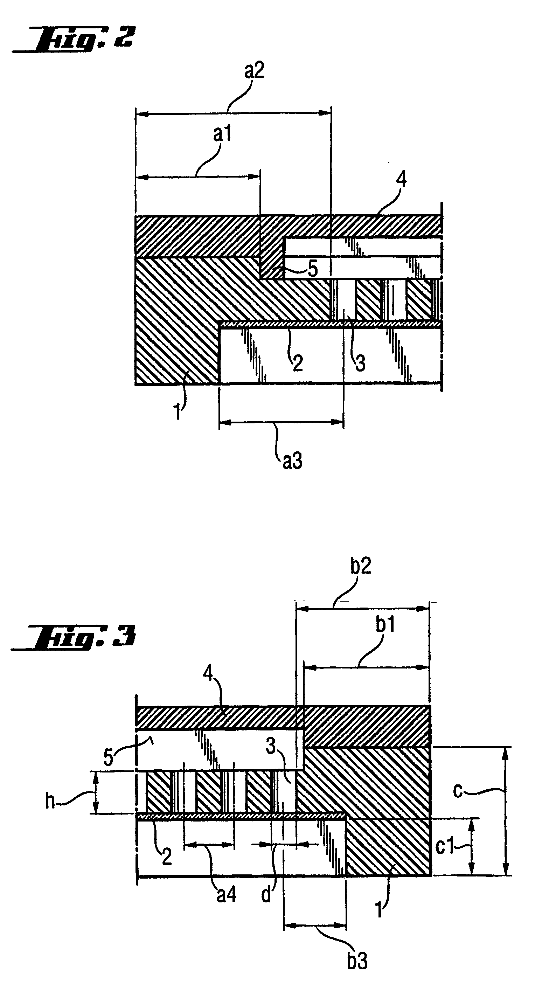

In Fig. 2 ist ein Schnitt gemäß Ebene II-II dargestellt. Der Glasboden (2) ist unter der Mikrotiterplatte befestigt. Der Randabstand (a1) beträgt 3 - 8 mm, bevorzugt 6 mm, und der Abstand (a2) 6 - 11 mm, bevorzugt 9,5 mm. Der entsprechende Randabstand (b1) in Fig. 3 beträgt ebenfalls 3 - 8 mm, bevorzugt 6 mm, und der Abstand (b2) 4 - 11 mm, bevorzugt 6,5 mm. Die Abstände zwischen dem Mittelpunkt der äußeren Gefäße (Wells) und dem Rand des Glasbodens (a3, b3) betragen 4 - 11 mm. Die Rahmenhöhe der Mikrotiterplatte beträgt c = 6 - 20 mm bevorzugt 6 - 15 mm, besonders bevorzugt 6 mm, und die Innenhöhe c1 3 - 12 mm, bevorzugt 3 mm. Der Gefäßdurchmesser (d) liegt zwischen 1,0 und 1,8 mm, besonders bevorzugt bei 1,3 mm, der Gefäßabstand (a4) bei 2,25 mm und die Gefäßhöhe (h) zwischen 2,0 und 7,0 mm.

## Patentansprüche

1. Miniaturisierte Mikrotiterplatte mit einem Körper aus Kunststoff, wobei die Mikrotiterplatte 1000 bis 4000 Gefäße (Wells) (3) hat, der Durchmesser der Gefäße (Wells) (d) 1,0 bis 1,8 mm ist, der Boden der Mikrotiterplatte (2) aus Glas besteht und eine Schichtdicke von 0,07 - 0,2 mm aufweist, der Abstand (a3, b3) zwischen dem Mittelpunkt der äußeren Gefäße (Wells) und dem Rand des Glasbodens 4 bis 11 mm ist und die Mikrotiterplatte einen Deckel (4) als Verdunstungsschutz hat.

2. Miniaturisierte Mikrotiterplatte gemäß Anspruch 1, **dadurch gekennzeichnet, daß** die Mikrotiterplatte 1400 bis 2500 Gefäße (Wells) hat, der Durchmesser der Gefäße 1,2 bis 1,5 mm ist, der Boden der Mikrotiterplatte eine Schichtdicke von 0,12 bis 0,17 mm aufweist.

3. Miniaturisierte Mikrotiterplatte gemäß Anspruch 1 und/oder 2, **dadurch gekennzeichnet, daß** die Mikrotiterplatte 1536 Gefäße (Wells) hat.

4. Miniaturisierte Mikrotiterplatte gemäß den Ansprüchen 1 bis 3, **dadurch gekennzeichnet, daß** der Boden der Mikrotiterplatte eine Schichtdicke von 0,15 mm aufweist.

## Claims

1. A miniaturized microtiter plate having a body made of plastic, where the microtiter plate has 1000 to 4000 vessels (wells) (3), the diameter of the vessels (wells) (d) is 1.0 to 1.8 mm, the base of the microtiter plate (2) is made of glass and has a thickness of 0.07 - 0.2 mm, the distance (a3, b3) between the center of the outer vessels (wells) and the edge of the glass base is 4 to 11 mm, and the microtiter plate has a lid (4) to prevent evaporation.

2. A miniaturized microtiter plate as claimed in claim 1, which has 1400 to 2500 vessels (wells), the diameter of the vessels is 1.2 to 1.5 mm, and the base of the microtiter plate has a thickness of 0.12 to 0.17 mm.

3. A miniaturized microtiter plate as claimed in claim 1 and/or 2, which has 1536 vessels (wells).

4. A miniaturized microtiter plate as claimed in claims 1 to 3, wherein the base of the microtiter plate has a thickness of 0.15 mm.

## Revendications

1. Plaque de microtitrage miniaturisée, comportant un corps en matière plastique, la plaque de microtitrage présentant 1000 à 4000 réceptacles (puits) (3), le diamètre des réceptacles (puits) (d) étant de 1,0 à 1,8 mm, le fond de la plaque de microtitrage (2) étant constitué de verre et présentant une épaisseur de couche de 0,07 à 0,2 mm, la distance (a3, b3) entre le centre des réceptacles extérieurs (puits) et le bord du fond de verre étant de 4 à 11 mm, et la plaque de microtitrage possédant un couvercle (4) servant de protection anti-évaporation.

2. Plaque de microtitrage miniaturisée selon la revendication 1, **caractérisé en ce que** la plaque de microtitrage présente 1400 à 2500 réceptacles (puits), le diamètre des réceptacles étant de 1,2 à 1,5 mm, le fond de la plaque de microtitrage présente une épaisseur de couche de 0,12 à 0,17 mm.

3. Plaque de microtitrage miniaturisée selon l'une ou l'autre des revendications 1 et 2, **caractérisée en ce que** la plaque de microtitrage présente 1536 réceptacles (puits).

4. Plaque de microtitrage miniaturisée selon l'une des revendications 1 à 3, **caractérisée en ce que** le fond de la plaque de microtitrage présente une épaisseur de couche de 0,15 mm.
